# EUROPEAN PATENT SPECIFICATION

(11) **EP 4 357 680 B1**
(45) Date of publication and mention of the grant of the patent: **30.04.2025**
(21) Application number: 23200516.5
(22) Date of filing: 28.09.2023
(51) Int. Cl.: F24C 15/32, F16K 31/00, F16K 15/02, F16K 15/06

(54) **AN OVEN WITH STEAM COOKING FUNCTION**
OFEN MIT DAMPFKOCHFUNKTION
FOUR À FONCTION DE CUISSON À LA VAPEUR

(30) Priority: 18.10.2022 TR 202215853
(43) Date of publication of application: 24.04.2024
(73) Proprietor: Arçelik Anonim Sirketi, 34445 Istanbul (TR)
(72) Inventor: BICER, Emrah, 34445 Istanbul (TR); KAYA, Ali Eralp, 34445 Istanbul (TR); SERABATIR, Davut Ayhan, 34445 Istanbul (TR); KAYA, Oguzhan, 34445 Istanbul (TR); AYTAN, Onur, 34445 Istanbul (TR)

(56) References cited:
- DE-A1- 102019 103 913
- JP-A- 2004 242 998
- US-A1- 2014 013 963

## Description

### Technical Field

The present invention relates to an oven wherein the steam cooking process is automatically performed.

### State of the Art

In order to perform steam cooking in ovens where steam cooking can be performed, the user must check the oven preheating time in the user manual. When the oven preheating time is reached, the user fills the water tank with the required amount and places the same in position. In this embodiment, the user is required to control and perform parameters such as the cooking time, the amount of water to be put into the tank by constantly checking the user manual.

One of the problems encountered in the state of the art valves is that even if the system is heated momentarily while supplying water, the shape memory alloy valves cannot function correctly if the incoming water is constantly cold.

Another technical problem is that in the designs of existing shape memory alloy valves, sediment, lime, dirt and similar matters in the valve impair the stroke function of the valve and cause a reduction in the economic life thereof.

Another technical problem is that the valves malfunction due to the irregular movement of the shape memory spring.

Therefore, considering the state of the art, there is a need for a valve which overcomes the above-mentioned problems, in other words, which can be operated reliably with minimum power consumption and which is installed with a less complex installation process to reduce the risk of failure.

JP 2004 242998 A discloses a rice cooker in which the supply of steam to the cooking pan is controlled by a valve.

US 2014/013963 A1 discloses a steam cooking appliance with an overflow opening that branches into an overflow drain and a steam exhaust tube, wherein a steam valve is provided on the steam exhaust tube and configured to change, at least temporarily, a cross section of the steam exhaust tube.

DE 10 2019 103913 A1 discloses a thermostatic valve for controlling the flow of working fluid or working gas in a motor vehicle.

### Brief Description of the Invention

The aim of the present invention is the realization of a valve which enables the water supply system to be established automatically without user intervention.

Another aim of the present invention is the realization of a valve which reduces energy consumption in the oven.

Another aim of the present invention is the realization of a valve which eliminates the security risk in an environment which can be very hot and difficult to reach where the system is used by the user.

Another aim of the present invention is the realization of a valve which is advantageous in terms of cost compared to electronic valves, and in terms of economic life and reliability compared to other mechanical valves comprising shape memory springs.

Another aim of the present invention is the realization of a valve which enables the irregular movement of the shape memory spring to be controlled and which thus prevents the valve failure by performing the vertical movement in a proper manner. The oven realized in order to attain the aim of the present invention, explicated in the first claim and the respective claims thereof, comprises a body, a casing surrounding the body; a water tank disposed between the casing and the body and filled with water; a pipe with one end opening into the water tank and the other end opening into the body and providing the transfer of water vapor into the body; a valve disposed on the pipe and providing the delivery of the water vapor into the body in a controlled manner; and a shape memory spring enabling the valve to open/close according to the temperature in the body. The oven of the present invention further comprises a connection member which ensures the connection of the valve and the pipe; a enclosure in the form of a cone tapering downwards in which the shape memory spring is vertically positioned and which provides the fixing of the spring; a sealing body positioned between said connection member and enclosure; and a piston positioned vertically in the sealing body, configured to block the fluid passage in a first position and allow the fluid passage in a second position, and entering the shape memory spring so as to move along the displacement direction from the first position to the second position.

Said figures are:
**Figure 1****:** is the rear top perspective view of an oven.

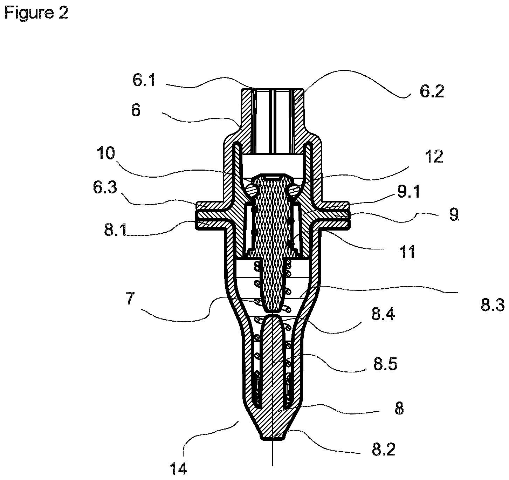

**Figure 2****:** is the cross-sectional view of the spring mechanism when the valve is in the closed position.

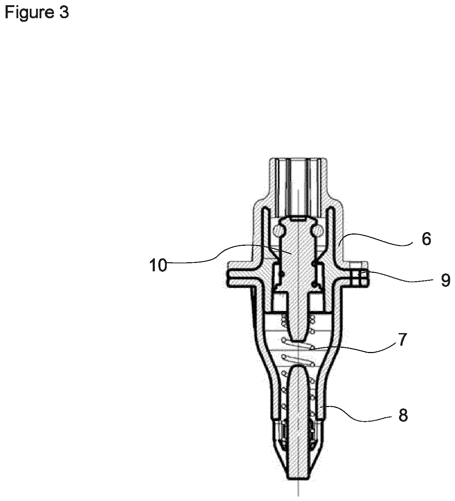

**Figure 3****:** is the cross-sectional view of the spring mechanism when the valve is in the open position.

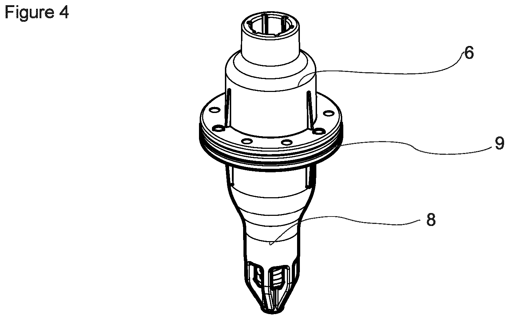

**Figure 4****:** is the view of the spring mechanism.

The following numerals are referred to in the description of the present invention:
1. Oven
2. Body
3. Water tank
4. Pipe
5. Valve
6. Connection member
   6.1 First connection end
   6.2 Channel
   6.3 Second connection end
7. Shape memory spring
8. Enclosure
   8.1 First end
   8.2 Second end
   8.3 Gap
   8.4 Pin
   8.5 Pin end
9. Sealing body
   9.1 Housing
10. Piston
11. Counter spring
12. Gasket
13. Spacer
14. First position
15. Second position

### Detailed Description of the Invention

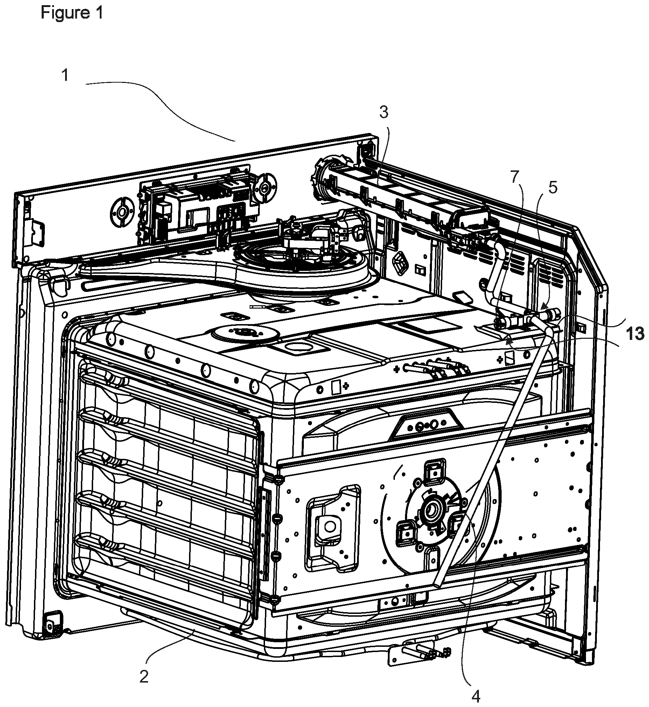

The oven (1) comprises a body (2), a casing surrounding the body (2); a water tank (3) disposed between the casing and the body (2) and filled with water; a pipe (4) with one end opening into the water tank (3) and the other end opening into the body (2) and providing the transfer of water vapor into the body (2); a valve (5) disposed on the pipe (4) and providing the delivery of the water vapor into the body (2) in a controlled manner; and a shape memory spring (7) enabling the valve (5) to open/close according to the temperature in the body (2) (Figure 1).

By means of the present invention, the steam cooking process is automatically performed without requiring the intervention of the user. Since the user does not open the oven (1) door, both safe use and energy savings are provided.

In an embodiment of the present invention, the valve (5) comprising the shape memory spring (7) is positioned on the outer wall of the body (2).

In an embodiment of the present invention, the oven (1) comprises a spacer (13) which is disposed on the outer wall of the body (2) and whereon the valve (5) is mounted. Thus, the body (2) heat is transferred to the shape memory spring (7) by conduction and the valve (5) is opened or closed at the right temperature and time. In an embodiment of the present invention, the spacer (13) is manufactured from sheet metal.

According to the present invention, the valve (5) comprises a connection member (6) which ensures the connection of the pipe (4); a shape memory spring (7) which enables the valve (5) to open/close automatically according to the temperature in the body (2); a enclosure (8) wherein the shape memory spring (7) is vertically positioned and which provides the fixing of the spring (7); a sealing body (9) which is positioned between said connection member (6) and enclosure (8); and a piston (10) which is positioned vertically in the sealing body (9), which is configured to block the fluid passage in a first position (14) and allow the fluid passage in a second position (15), and which enters the shape memory spring (7) so as to move along the displacement direction from the first position (14) to the second position (15). Surprisingly, when the preheating temperature of the oven (1) reaches 80°C, the shape memory spring (7) positioned vertically in the enclosure (8) gains potential force with the shear modulus thereof increasing approximately 5 times at this temperature so as to stretch and compress the piston (10). Thus, the shape memory spring (7) performs a vertical movement in the valve (5) and extends the economic life of the valve (5), and the shape memory spring (7) is referenced in the housing (8) such that the irregular movement thereof is kept under control. Thus, the vertical movement is performed in a proper manner and any valve (5) malfunction is prevented. Moreover, by means of the vertical positioning of the valve (5), any water accumulation therein is prevented so as to avoid dirt, sediment and similar formations.

Thus, the heat in the body (2) is transferred to the shape memory spring (7) in the most effective and correct manner, and in the second position (15) where the valve (5) opens automatically when the desired temperature is reached the steam cooking process is performed and in the first position (14) where the valve (5) closes automatically when the desired temperature is reached, the steam cooking process is terminated. Thus, the heat in the body (2) is transferred to the shape memory spring (7) in the most efficient and correct manner so as to ensure that the valve (5) closes when the desired temperature is reached.

In an embodiment of the present invention, the valve (5) provides the controlled transmission of water vapor into the body (2) through the pipe (4). The connection member (6) comprises a first connection end (6.1) where the valve (5) and the pipe (4) are connected, a channel (6.2) through which the water flows, and a second connection end (6.3) where the sealing body (9) is disposed. By means of said channels (6.2), it is ensured that the flow of water is not blocked even if the piston (10) narrows down the cross-section of the flow.

In an embodiment of the present invention, the sealing body (9) comprises a housing (9.1) wherein the piston (10) is positioned. In an embodiment of the present invention, at least one counter spring (11) is positioned between the housing (9.1) and the piston (10) so as to be pushed in the direction of the channel (6.2) and compressed. In the position where the counter spring (11) is compressed, at least one sealing gasket (12) is disposed in the piston (10).

In an embodiment of the present invention, the piston (10) is in the form of a cone tapering downwards. The sealing body (9) maintains the vertical movement of the piston (10), thus allowing the same to move horizontally without oscillation. The conical structure of the piston (10) disposed in the housing (9.1) in the middle of the sealing body (9) and the sealing gasket (12) provide the sealing of the system when the valve (5) is in the first position (14). The water channels (6.2) provided in the connection member (6) ensure that the water flow is not blocked even if the piston (10) narrows the cross-section of the water flow.

In an embodiment of the present invention, the enclosure (8) is in the form of a cone tapering downwards. The enclosure (8) comprises a first end (8.1) where the enclosure (8) joins with the sealing body (9); a second end (8.2) which tapers downwards from the sealing body (9); a gap (8.3) wherein the shape memory spring (7) is placed vertically; and a pin (8.5) having a conical pin end (8.4), which defines the path for the shape memory spring (7) while stretching and compressing with temperature change and prevents the same from getting stuck. The tapering structure of the pin end (8.4) ensures the stable movement of the shape memory spring (7). The tapering form of the second end (8.2) of the enclosure (8) provides the fixing of the shape memory spring (7). The opening between the gap (8.3) in the enclosure (8) and the point where the pin (8.5) joins the second end (8.2) of the enclosure (8) provides the control and position adjustment of the shape memory spring (7).

## Claims

1. An oven (1) **comprising** a body (2); a casing surrounding the body (2); a water tank (3) disposed between the casing and the body (2) and filled with water; a pipe (4) with one end opening into the water tank (3) and the other end opening into the body (2) and providing the transfer of water vapor into the body (2); a valve (5) disposed on the pipe (4) and providing the delivery of the water vapor into the body (2) in a controlled manner; and a shape memory spring (7) which enables the valve (5) to open/close according to the temperature in the body (2), **characterized by** a connection member (6) ensuring the connection of the valve (5) and the pipe (4); an enclosure (8) in the form of a cone tapering downwards in which the shape memory spring (7) is vertically positioned and providing the fixing of the spring (7); a sealing body (9) positioned between said connection member (6) and enclosure (8); and a piston (10) positioned vertically in the sealing body (9), configured to block the fluid passage in a first position (14) and allow the fluid passage in a second position (15), and entering the shape memory spring (7) so as to move along the displacement direction from the first position (14) to the second position (15).

2. An oven (1) as in Claim 1, **characterized by** the connection member (6) comprising a first connection end (6.1) where the valve (5) and the pipe (4) are connected, channels (6.2) through which the water flows, and a second connection end (6.3) where the sealing body (9) is disposed.

3. An oven (1) as in any one of the above claims, **characterized by** the connection member (6) which is in the form of a cone widening downwards.

4. An oven (1) as in Claim 1 or 2, **characterized by** a housing (9.1) in the sealing body (9) wherein the piston (10) is positioned, at least one counter spring (11) which is positioned between the housing (9.1) and the piston (10) so as to be pushed in the direction of the channel (6.2) and compressed, and at least one sealing gasket (12) is disposed in the piston (10) in the position where the counter spring (11) is compressed.

5. An oven (1) as in any one of the above claims, **characterized by** the enclosure (8) comprising a first end (8.1) which joins with the sealing body (9); a second end (8.2) which tapers downwards from the sealing body (9); a gap (8.3) wherein the shape memory spring (7) is placed vertically; and a pin (8.5) having a conical pin end (8.4), which defines the path for the shape memory spring (7) while stretching and compressing with temperature change and prevents the same from getting stuck.

6. An oven (1) as in Claim 5, **characterized in that** there is an opening between the gap (8.3) in the enclosure (8) and the point where the second end (8.2) of the enclosure (8) and the pin (8.5) join.

## Patentansprüche

1. Ein Ofen (1) **umfasst** einen Körper (2); ein Gehäuse, das den Körper (2) umgibt; einen Wassertank (3), der zwischen dem Gehäuse und dem Körper (2) angeordnet und mit Wasser gefüllt ist; ein Leitung (4), dessen eines Ende sich in den Wassertank (3) und dessen anderes Ende sich in den Körper (2) öffnet und das den Transfer von Wasserdampf in den Körper (2) ermöglicht; ein Ventil (5), das auf dem Leitung (4) angeordnet ist und die Abgabe des Wasserdampfes in den Körper (2) in einer kontrollierten Weise bereitstellt; und eine Formgedächtnisfeder (7), die es dem Ventil (5) ermöglicht, sich entsprechend der Temperatur in dem Körper (2) zu öffnen/schließen, **gekennzeichnet ist es dadurch,** dass ein Verbindungselement (6) die Verbindung des Ventils (5) mit der Leitung (4) sicherstellt; ein Gehäuse (8) in Form eines sich nach unten verjüngenden Kegels, in dem die Formgedächtnisfeder (7) vertikal positioniert ist und die Befestigung der Feder (7) gewährleistet; ein Dichtungskörper (9), der zwischen dem Verbindungselement (6) und dem Gehäuse (8) positioniert ist; und einen Kolben (10), der vertikal in dem Dichtungskörper (9) positioniert ist und so konfiguriert ist, dass er den Fluiddurchgang in einer ersten Position (14) blockiert und den Fluiddurchgang in einer zweiten Position (15) freigibt und in die Formgedächtnisfeder (7) eintritt, so dass sie sich entlang der Verschiebungsrichtung von der ersten Position (14) zur zweiten Position (15) bewegt.

2. Ein Ofen (1), wie in Anspruch 1 aufgeführt, **ist dadurch gekennzeichnet, dass** das Verbindungselement (6) ein erstes Anschlussende (6.1), an dem das Ventil (5) und das Leitung (4) angeschlossen sind, Kanäle (6.2), durch die das Wasser fließt, und ein zweites Anschlussende (6.3), an dem der Dichtungskörper (9) angeordnet ist, umfasst.

3. Ein Ofen (1), wie in einem der vorherigen Ansprüchen aufgeführt, **ist dadurch gekennzeichnet, dass** das Verbindungselement (6) die Form eines sich nach unten erweiternden Kegels hat.

4. Ein Ofen (1), wie in Anspruch 1 oder 2 aufgeführt, **ist dadurch gekennzeichnet, dass** ein Gehäuse (9.1) in dem Dichtungskörper (9), in dem der Kolben (10) positioniert ist, mindestens eine Gegenfeder (11), die zwischen dem Gehäuse (9.1) und dem Kolben (10) so positioniert ist, dass sie in Richtung des Kanals (6.2) gedrückt und zusammengedrückt wird, und mindestens eine Dichtung (12) in dem Kolben (10) in der Position angeordnet sind, in der die Gegenfeder (11) zusammengedrückt ist.

5. Ein Ofen (1), wie in einem der vorherigen Ansprüchen aufgeführt, **ist dadurch gekennzeichnet, dass** das Gehäuse (8) ein erstes Ende (8.1), das mit dem Dichtungskörper (9) verbunden ist; ein zweites Ende (8.2), das sich von dem Dichtungskörper (9) aus nach unten verjüngt; einen Spalt (8.3), in dem die Formgedächtnisfeder (7) vertikal angeordnet ist; und einen Stift (8.5) mit einem konischen Stiftende (8.4) umfasst, der den Weg für die Formgedächtnisfeder (7) definiert, während sie sich bei einer Temperaturänderung dehnt und zusammendrückt, und verhindert, dass sie stecken bleibt.

6. Ein Ofen (1), wie in Anspruch 5 aufgeführt, **ist dadurch gekennzeichnet, dass** zwischen dem Spalt (8.3) im Gehäuse (8) und der Stelle, an der das zweite Ende (8.2) des Gehäuses (8) und der Stift (8.5) zusammenstoßen, eine Öffnung vorhanden ist.

## Revendications

1. Un four (1) comprenant un corps (2) ; un carter entourant le corps (2) ; un réservoir d'eau (3) disposé entre le carter et le corps (2) et rempli d'eau ; un conduit (4) avec une extrémité s'ouvrant dans le réservoir d'eau (3) et l'autre extrémité s'ouvrant dans le corps (2), et permettant le transfert de vapeur d'eau dans le corps (2) ; une vanne (5) disposée sur le conduit (4) et assurant la délivrance de la vapeur d'eau dans le corps (2) de manière contrôlée ; un ressort à mémoire de forme (7) qui permet l'ouverture/la fermeture de la vanne (5) en fonction de la température dans le corps (2), **caractérisé par** un élément de connexion (6) assurant la liaison entre la vanne (5) et le conduit (4) ; un boîtier (8) en forme de cône se rétrécissant vers le bas dans lequel le ressort à mémoire de forme (7) est positionné verticalement et permettant la fixation du ressort (7); un élément d'étanchéité (9) positionné entre ledit élément de connexion (6) et le boîtier (8) ; un piston (10) disposé verticalement dans l'élément d'étanchéité (9), configuré pour bloquer le passage du fluide dans une première position (14) et permettre le passage du fluide dans une seconde position (15), et pénétrant dans le ressort à mémoire de forme (7) de manière à se déplacer le long de la direction de déplacement de la première position (14) à la seconde position (15).

2. Un four (1) selon la Revendication 1, **caractérisé par** l'élément de connexion (6) comprenant une première extrémité de connexion (6.1) où la vanne (5) et le conduit (4) sont raccordés ; des canaux (6.2) à travers lesquels l'eau s'écoule ; une seconde extrémité de connexion (6.3) où l'élément d'étanchéité (9) est disposé.

3. Un four (1) selon l'une quelconque des revendications précédentes, **caractérisé par** un élément de connexion (6) qui est en forme de cône s'élargissant vers le bas.

4. Un four (1) selon la Revendication 1 ou 2, **caractérisé par** un logement (9.1) se trouvant dans l'élément d'étanchéité (9) dans lequel le piston (10) est positionné ; au moins un ressort de rappel (11) disposé entre le logement (9.1) et le piston (10) de manière à être poussé dans la direction du canal (6.2) et comprimé ; et au moins un joint d'étanchéité (12) qui est disposé dans le piston (10) dans la position où le ressort de rappel (11) est comprimé.

5. Un four (1) selon l'une quelconque des revendications précédentes, **caractérisé par** un boîtier (8) comprenant une première extrémité (8.1) en liaison avec l'élément d'étanchéité (9) ; une seconde extrémité (8.2) qui se rétrécis vers le bas à partir de l'élément d'étanchéité (9) ; un espace (8.3) dans lequel le ressort à mémoire de forme (7) est positionné verticalement ; et une broche (8.5) ayant une extrémité de broche conique (8.4), qui définit la trajectoire du ressort à mémoire de forme (7) lors de son extension et de sa compression en fonction des variations de température et qui empêche celui-ci de se bloquer.

6. Un four (1) selon la Revendication 5, **caractérisé en ce qu'il** y a une ouverture entre l'espace (8.3) dans le boîtier (8) et le point de jonction entre la seconde extrémité (8.2) du boîtier (8) et la broche (8.5).
